# EUROPÄISCHE PATENTSCHRIFT

(11) **EP 1 254 753 B1**
(45) Veröffentlichungstag und Bekanntmachung des Hinweises auf die Patenterteilung: **22.09.2004**
(21) Anmeldenummer: 02005176.9
(22) Anmeldetag: 08.03.2002
(51) Int. Cl.: B29C 45/16, B29C 45/40

(54) **Werkzeug zum Mehrkomponenten-Spritzgiessen von Kunststoff-spritzteilen**
Mould for multicomponent injection moulding of plastic objects
Moule pour mouler par injection à plusieurs composants des objets en matière plastique

(30) Priorität: 30.04.2001 DE 10121230
(43) Veröffentlichungstag der Anmeldung: 06.11.2002
(73) Patentinhaber: Braun Formenbau GmbH, 79353 Bahlingen (DE)
(72) Erfinder: Herb, Eckard, 79346 Endingen (DE); Bühler, Klaus, 79353 Bahlingen (DE)
(74) Vertreter: Goy, Wolfgang, Dipl.-Phys.

(56) Entgegenhaltungen:
- EP-A- 1 053 851
- US-A- 3 914 081
- PATENT ABSTRACTS OF JAPAN vol. 1998, no. 05, 30. April 1998 (1998-04-30) & JP 10 016002 A (SHIN ETSU POLYMER CO LTD), 20. Januar 1998 (1998-01-20)

## Beschreibung

Die Erfindung betrifft ein Werkzeug zum Mehrkomponenten-Spritzgießen von Kunststoff-Spritzteilen nach dem Oberbegriff des Anspruchs 1.

Zum Spritzen von aus mehreren Kunststoff-Komponenten bestehenden Spritzteilen muß der zunächst gespritzte Vorspritzling in einen weiteren Formenhohlraum übergeführt werden, wo eine weitere Komponente gespritzt werden kann. Um den Vorspritzling der ersten Komponente in den Formenhohlraum für die zweite Komponente umzusetzen, gibt es sogenannte Wendewerkzeuge. Darunter ist zu verstehen, daß sich in der einen Werkzeughälfte ein sogenanntes Wendeteil befindet, welches nach dem Spritzen der ersten Komponente um 180° zum Spritzen der zweiten Komponente gedreht wird, wobei dieses Wendeteil den Vorspritzling während der Drehbewegung hält. Wenn noch mehr Komponenten gespritzt werden sollen, wird das Wendeteil um 120° bzw. 90° für die weitere Komponente gedreht. Um die Spritzlinge auf dieser Umsetzeinrichtung zu halten, weist diese Umsetzeinrichtung entsprechende Formkerne auf, welche in die Formenhohlräume eingeführt und entsprechend umspritzt werden. Mittels einer Abstreifeinrichtung können die Fertigspritzlinge von dem jeweiligen Formkern abgestreift werden. Das Problem hier besteht jedoch darin, daß die Haltekraft von sehr dickwandigen Spritzlingen auf den Formkernen sehr groß ist, so daß sie nur sehr schwer von den Formkernen abgestreift werden können. Insbesondere besteht auch die Gefahr, daß das Werkzeug verformt wird.

Die EP-A-1 053 851 zeigt ein Werkzeug zum Zwei-Komponenten-Spritzgießen von ein Gewinde, insbesondere ein Innengewinde, aufweisenden Formteilen der eingangs angegebenen Art. Dabei weist die eine Werkzeughälfte dieses Werkzeugs ein sogenanntes Wendeteil auf, an dem quer abstehend Gewindekerne angeordnet sind. Nach dem Spritzen der ersten Komponente wird das Wendeteil um 180° zum Spritzen der zweiten Komponente gedreht. Zum Entformen der fertig gespritzten Formteile werden die Gewindekerne mittels einer längsverschiebbaren Zahnstange derart um ihre Längsachsen gedreht, daß die Gewindekerne aus dem gespritzten Gewinde des Formteils herausgeschraubt werden. Dem Werkzeug ist weiterhin eine Halte- und Auswerfeinrichtung für die gespritzten Formteile zugeordnet. Dabei wird zum Auswerfen der gespritzten Formteile das Wendeteil derart ausgefahren, bis es mittels seiner Halte- und Auswerfeinrichtung die Abstreifposition erreicht hat. Zu diesem Zweck ist in der Werkzeughälfte, welches das Wendeteil aufweist, ein Verfahrteil querverschiebbar angeordnet. Dieses Verfahrteil weist zwei Zinken auf, die zwischen sich ein Abstreifteil festlegen, das auf den Formkernen längsverschiebbar ist.

Davon ausgehend liegt der Erfindung die **Aufgabe** zugrunde, ein Werkzeug zum Mehrkomponenten-Spritzgießen von Kunststoff-Spritzteilen der eingangs angegebenen Art mit einer verbesserten Abstreifeinrichtung für die Fertigspritzlinge von den Formkernen zu schaffen.

Die technische **Lösung** ist gekennzeichnet durch die Merkmale im Kennzeichen des Anspruchs 1.

Die Grundidee der erfindungsgemäßen Abstreifeinrichtung besteht darin, diese nicht als separate Baueinheit auszubilden (was ohnehin bei bestimmten Werkzeugen gar nicht möglich wäre), sondern die Abstreifeinrichtung in der Umsetzeinrichtung zu integrieren. Zu diesem Zweck sind an dem festen Teil der Umsetzeinrichtung die Formkerne fest angeordnet. Die Formkerne erstrecken sich dabei in Querrichtung zur Längserstreckung der Verfahrrichtung der Umsetzeinrichtung. Unter dieser Queranordnung der Formkerne ist auch zu verstehen, daß mehrere Formkerne nebeneinander an einer Leiste angeordnet sind, so daß die Längserstreckungen der Formkerne senkrecht auf der Längsmittelebene der Umsetzeinrichtung stehen. Auf den Formkemen sind Abstreifteile aufgesteckt. Während des Spritzvorganges sind diese Abstreifteile zurückgefahren, so daß die Formkerne umspritzt werden können. Zum Abstreifen der Fertigspritzlinge wird dann das Abstreifteil nach vorne verfahren, so daß der Fertigspritzling von dem Formkern weggedrückt wird. Die Verwendung einer Zwangsführung hat den Vorteil, daß durch den Führungsweg der Abstreifablauf gesteuert werden kann. Die Grundidee der konstruktiven Realisierung der Zwangsführung besteht dabei darin, daß diejenige Werkzeughälfte, welche die Umsetzeinrichtung und damit das Abstreifteil aufnimmt, auch das Verfahrteil aufnimmt. Zwischen dem Verfahrteil und dem Abstreifteil ist die Zwangsführung durch einen Führungskanal sowie einen darin eingreifenden Führungsstift gebildet. Vorzugsweise ist am Abstreifteil der Führungsstift und am Verfahrteil der Führungskanal ausgebildet. Selbstverständlich kann die Anordnung auch umgekehrt sein. Zum Verfahren des Verfahrteils kann ein Zahnradgetriebe vorgesehen sein, wobei das Verfahrteil vorzugsweise mit einer Zahnstange ausgestattet ist. Durch den Kurvenverlauf des Führungskanals kann die Bewegung des Abstreifteils und damit der Abziehvorgang gezielt gesteuert werden. Indem das Verfahrteil in Verfahrrichtung der Umsetzeinrichtung verfahrbar ist, ist es durch eine entsprechende Kurvenführung möglich, während der Linearbewegung des Verfahrteils das Abstreifteil radial nach außen zu bewegen. Dadurch ist insgesamt eine technisch einfache Möglichkeit einer Abstreifeinrichtung geschaffen, mittels der auch fest sitzende Fertigspritzlinge von den Formkernen entfernt werden können.

Eine bevorzugte Weiterbildung schlägt Anspruch 2 vor. Dadurch werden die Entformkräfte innehalb der Absteifeinheit aufgehoben. Der Vorteil besteht darin, daß dadurch keine seitlichen Belastungen auf die Hauptwelle der Umsetzeinrichtung wirken und sich damit das Werkzeug nicht im Laufe der Zeit verformt.

Die Weiterbildung gemäß Anspruch 3 schließlich hat den Vorteil, daß durch die beidseitige Anordnung jeweils eines Verfahrteils die Abziehkräfte gleichmäßig in das Abstreifteil eingeleitet werden.

Die Weiterbildung gemäß Anspruch 4 hat den Vorteil, daß die Formkerne nach dem Spritzen der zweiten Komponente nicht wieder zurückverfahren werden müssen, um in die Position zum Spritzen der ersten Komponente zu gelangen, sondern daß im Sinne eines Wechselspritzvorganges auf der gegenüberliegenden Seite bereits wieder die erste Komponente für den nachfolgenden Zyklus gespritzt werden kann.

Um die Reibung zwischen dem Führungskanal und dem Führungsstift auf ein Minimum zu reduzieren, ist gemäß der Weiterbildung in Anspruch 5 der Führungsstift vorzugsweise durch Rollen gebildet.

Ein Ausführungsbeispiel eines erfindungsgemäßen Werkzeugs zum Mehrkomponenten-Spritzgießen von Kunststoff-Spritzteilen mit einer erfindungsgemäßen Abstreifeinrichtung wird nachfolgend anhand der Zeichnungen beschrieben. In diesen zeigt:
- Fig. 1: eine Seitenansicht des Werkzeugs im geschlossenen Zustand;
- Fig. 2 bis 5: das Werkzeug in verschiedenen Verfahrensschritten;

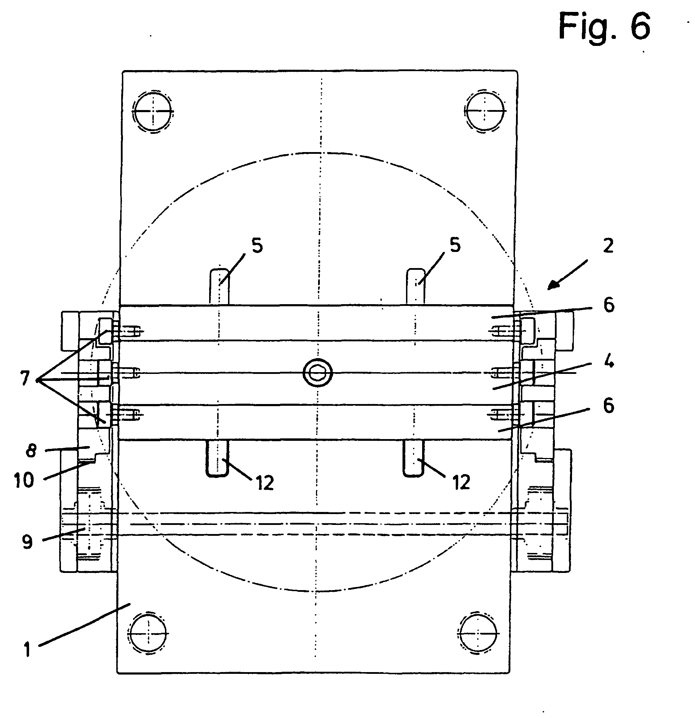

- Fig. 6: eine Stirnansicht der linken Werkzeughälfte in Fig. 1.

Das Werkzeug zum Mehrkomponenten-Spritzgießen von Kunststoff-Spritzteilen weist zwei Werkzeughälften 1, 1' auf, welche voneinander weg und aufeinander zu bewegbar sind. Diese Werkzeughälften 1, 1' definieren zwischen sich Formenhohlräume zum Spritzen zunächst einer ersten Komponente und anschließend zum Spritzen einer zweiten Komponente.

In der einen Werkzeughälfte 1 befindet sich eine linear verschiebbare Umsetzeinrichtung 2. Sie ist am vorderen Ende einer Welle 3 gelagert. Die Umsetzeinrichtung 2 weist dabei in der Mitte ein fest mit der Welle 3 verbundenes Umsetzteil 4 auf. Von diesem Umsetzteil 4 gehen nach beiden Seiten hin, d.h. senkrecht zur Längsmittelebene der Umsetzeinrichtung 2 Formkerne 5 ab. Auf den beiden Reihen dieser Formkerne 5 ist jeweils ein Abstreifteil 6 der Umsetzeinrichtung 2 verschiebbar gelagert. Diese beiden Abstreifteile 6 weisen seitlich jeweils Führungsstifte 7 in Form von Rollen auf.

In der Werkzeughälfte 1, welche auch die Umsetzeinrichtung 2 aufnimmt, ist ein Verfahrteil 8 parallel zur Welle 3 verfahrbar gelagert. Als Antrieb dient ein Zahnradgetriebe 9, welches mit einer Zahnstange 10 des Verfahrteils 8 kämmt. Korrespondierend zu dem Führungsstift 7 des einen Abstreifteils 6 weist das Verfahrteil einen Führungskanal 11 auf, welcher bezüglich der Verfahrrichtung des Verfahrteils 8 in einem Bogen geneigt ist. Da das mittlere Umsetzteil 4 der Umsetzeinrichtung 2 ebenfalls seitlich einen Führungsstift 7 aufweist, besitzt das Verfahrteil 8 auch einen korrespondierenden Führungskanal 11, welcher sich jedoch hier exakt in Verfahrrichtung des Verfahrteils 8 erstreckt.

Die Funktionsweise ist wie folgt:

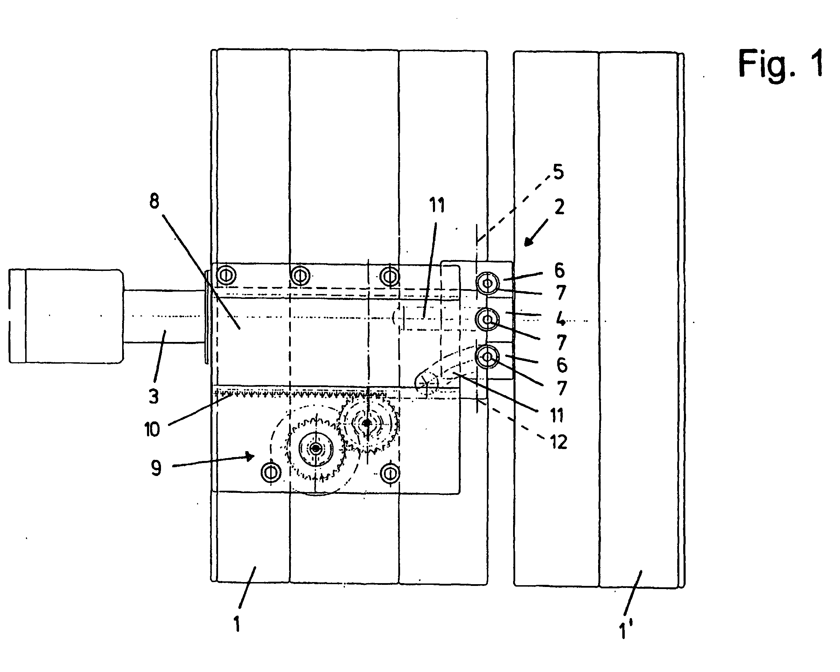

Fig. 1 zeigt das Werkzeug im geschlossenen Zustand. Oben wird die erste Komponente um die zugehörigen Formkerne 5 herum gespritzt, während unten die zweite Komponente gespritzt wird. Dadurch sind die Fertigspritzlinge 12 geschaffen.

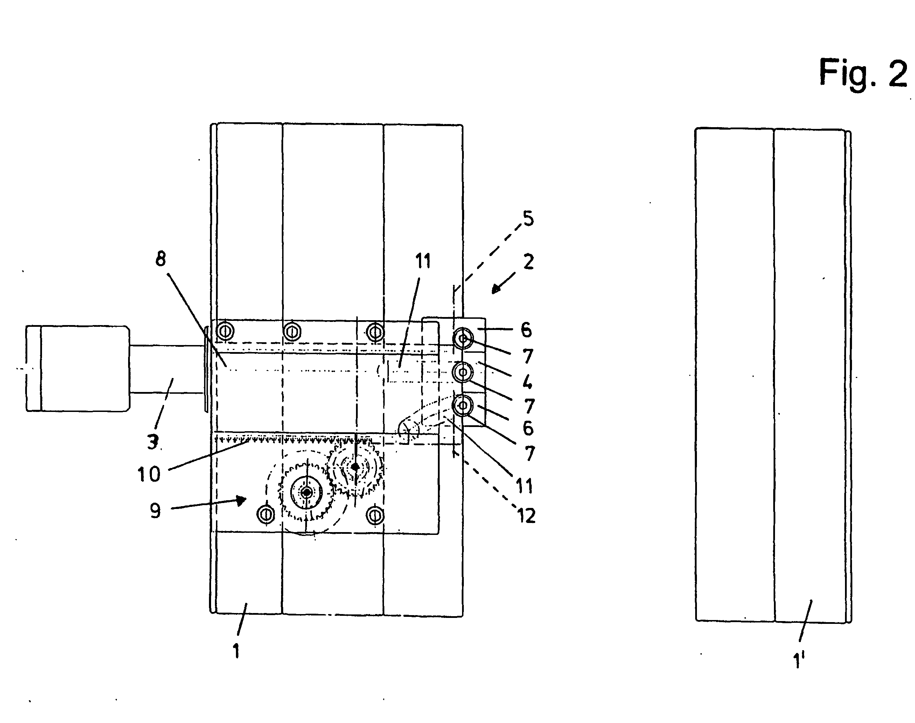

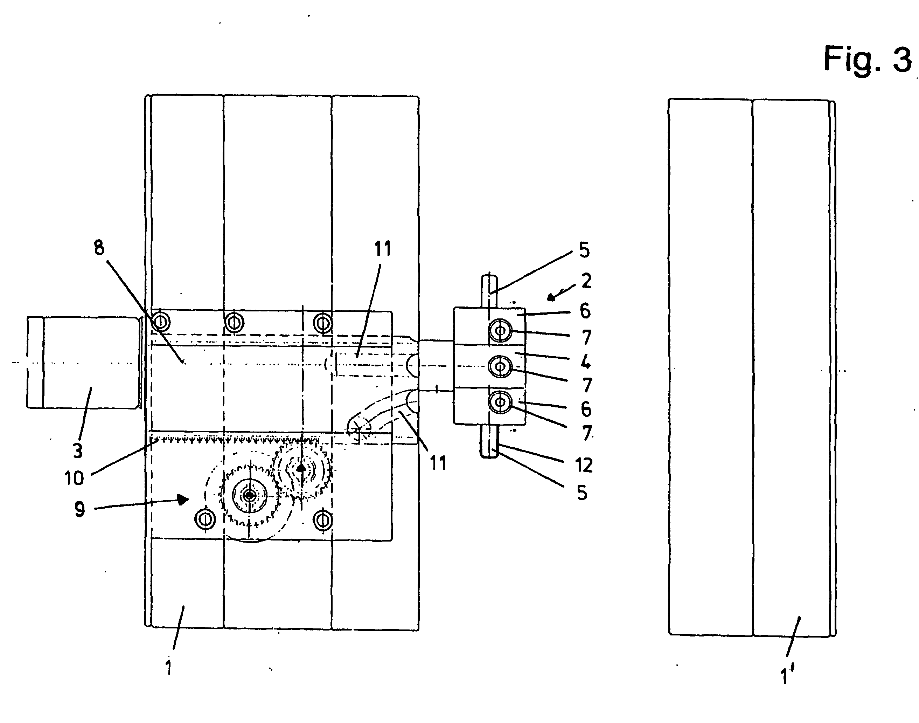

In Fig. 2 werden die beiden Werkzeughälften 1, 1' auseinandergefahren, d.h. das Werkzeug ist offen. Anschließend wird in Fig. 3 die Umsetzeinrichtung 2 mittels ihrer Welle 3 ausgefahren. Der unten befindliche Fertigspritzling 12 verbleibt auf seinem Formkern 5.

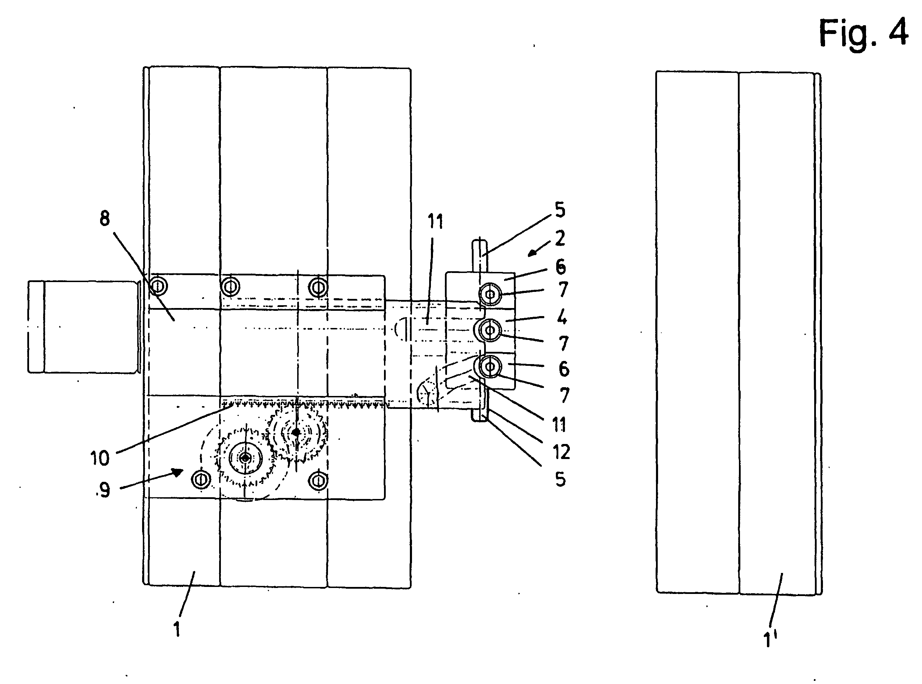

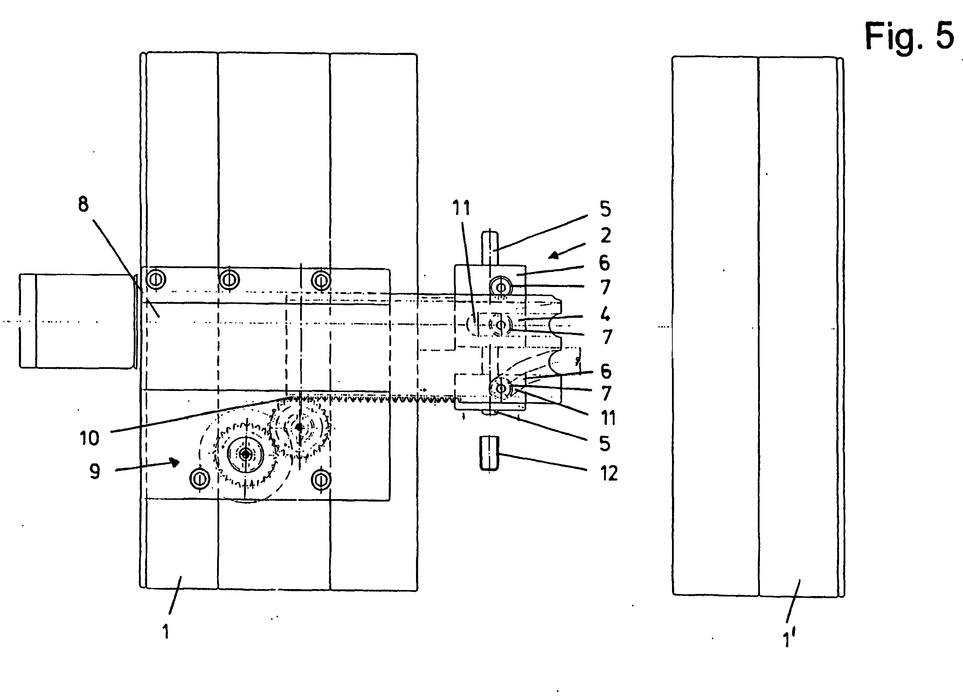

In Fig. 4 wird die Abstreifeinrichtung mit ihrem Verfahrteil 8 nach vorne in Richtung Umsetzeinrichtung 2 verfahren. Die Führungsstifte 7 sowohl beim mittleren Umsetzteil 4 als auch beim unteren Abstreifteil 6 der Umsetzeinrichtung 2 kommen in den korrespondierenden Führungskanälen 11 des Verfahrteils 8 zu liegen. Durch das weitere Ausfahren des Verfahrteils 8 (Fig. 5) wird das Abstreifteil 6 zum vorderen Ende des (unteren) Formkerns 5 verschoben. Dadurch wird der Fertigspritzling 12 von seinem Formkern 5 abgestreift und damit von dem Formkern 5 entformt. Durch die Stifte 7 sowohl am mittleren Umsetzteil 4 als auch am entformenden Abstreifteil 6 werden die Entformkräfte innerhalb der Abstreifeinheit aufgehoben. Dadurch kommen keine seitlichen Belastungen auf die Welle 3.

Beim Zurückfahren des Verfahrteils 8 wird das Abstreifteil 6 wieder in die Endposition geschoben. Die Umsetzeinrichtung 2 kann drehen, und der Zyklus beginnt wieder von vorne.

### Bezugszeichenliste

- 1, 1': Werkzeughälfte
- 2: Umsetzeinrichtung
- 3: Welle
- 4: Umsetzteil
- 5: Formkern
- 6: Abstreifteil
- 7: Führungsstift
- 8: Verfahrteil
- 9: Zahnradgetriebe
- 10: Zahnstange
- 11: Führungskanal
- 12: Fertigspritzling

## Patentansprüche

1. Werkzeug zum Mehrkomponenten-Spritzgießen von Kunststoff-Spritzteilen
mit zwei Werkzeughälften (1,1'), zwischen welchen die Formenhohlräume ausgebildet sind und welche auseinanderfahrbar sowie schließbar sind,
mit einer in der einen Werkzeughälfte (1) integrierten sowie in dieser ausfahrbaren, drehbaren sowie wieder versenkbaren Umsetzeinrichtung (2),
mit wenigstens einem, an der Umsetzeinrichtung (2) angeordneten sowie in Querrichtung zur Längserstreckung der Verfahrrichtung der Umsetzeinrichtung (2) sich erstrekkenden Formkern (5),
wobei der Vorspritzling mittels der Umsetzeinrichtung (2) zum Spritzen einer weiteren Komponente auf seinem Formkem (5) in den zugehörigen Formenhohlraum umsetzbar ist, sowie
mit einer Abstreifeinrichtung für den Fertigspritzling (12) von dem Formkern (5), die Abstreifeinrichtung
mit einem auf dem Formkern (5) angeordneten Abstreifteil (6) sowie
mit einem in der die Umsetzeinrichtung (2) aufnehmenden Werkzeughälfte (1) angeordneten Verfahrteil (8),
mittels welchem das Abstreifteil (6) mittels einer Zwangsführung zum vorderen Ende des Formkerns (5) hin beweglich geführt ist,
**dadurch gekennzeichnet,**
**daß** das Verfahrteil (8) der Abstreifeinrichtung in Verfahrrichtung der Umsetzeinrichtung (2) verfahrbar ist und
**daß** die Zwangsführung durch einen gebogenen Führungskanal (11) sowie durch einen darin eingreifenden Führungsstift (7) in dem Verfahrteil (8) sowie in dem Abstreifteil (6) gebildet ist.

2. Werkzeug nach dem vorhergehenden Anspruch,
**dadurch gekennzeichnet,**
**daß** zusätzlich zwischen dem fest angeordneten Umsetzteil (4) der Umsetzeinrichtung (2) und dem Verfahrteil (8) ein in Verfahrrichtung sich erstreckender gerader Führungskanal (11) sowie ein Führungsstift (7) angeordnet ist.

3. Werkzeug nach einem der vorhergehenden Ansprüche,
**dadurch gekennzeichnet,**
**daß** beidseits der Umsetzeinrichtung (2) jeweils ein Verfahrteil (8) angeordnet ist.

4. Werkzeug nach einem der vorhergehenden Ansprüche,
**dadurch gekennzeichnet,**
**daß** beidseits der Längsmittelebene der Umsetzeinrichtung (2) Formkerne (5) mit jeweils einem zugeordneten Abstreifteil (6) angeordnet sind.

5. Werkzeug nach einem der vorhergehenden Ansprüche,
**dadurch gekennzeichnet,**
**daß** der Führungsstift (7) durch Rollen gebildet ist.

## Claims

1. Tool for multi-component injection moulding of plastic mouldings
with two tool halves (1, 1'), between which are formed the mould cavities and
which can be moved apart and closed,
with a turning device (2) which is integrated in the one tool half (1), which can be extended into this, rotated and lowered again,
with at least one mould core (5) arranged on the turning device (2) and extending in the transverse direction to the longitudinal extension of the transport direction of the turning device (2),
where the premould can be turned by means of the turning device (2) for moulding of a further component on its mould core (5) in the associated mould cavity,
and with a stripper device for stripping the finished moulding (12) from the mould core (5), the stripper device having
a stripper part (6) arranged on the mould core (5), and
a transport part (8) arranged in the tool half (1) holding the turning device (2), by means of which the stripper part (6) can be moved by a forced guide to the front end of the mould core (5),
**characterised in that**
the transport part (8) of the stripper device can be moved in the transport direction of the turning device (2), and
**in that** the forced guide is formed by a curved guide channel (11) and by a guide pin (7) engaged therein, in the transport part (8) and in the stripper part (6).

2. Tool according to the previous claim, **characterised in that** in addition between the stationary turning part (4) of the turning device (2) and the transport part (8) is arranged a straight guide channel (11) extending in the transport direction and a guide pin (7).

3. Tool according to either of the previous claims, **characterised in that** a transport part (8) is arranged on both sides of the turning device (2).

4. Tool according to any of the previous claims, **characterised in that** on both sides of the longitudinal centre plane of the turning device (2) are arranged mould cores (5), each with an allocated stripper part (6).

5. Tool according to any of the previous claims, **characterised in that** the guide pin (7) is formed by rollers.

## Revendications

1. Moule pour mouler par injection des pièces en matière plastique à plusieurs composants, comprenant deux moitiés de moule (1, 1') entre lesquelles sont réalisées les cavités du moule et qui peuvent être éloignées l'une de l'autre et fermées, comprenant un dispositif de transfert (2) intégré dans l'une des moitiés de moule (1), pouvant être extraite de cette dernière, tourner et à nouveau s'encastrer dans celle-ci, au moins un noyau (5) disposé sur le dispositif de transfert (2) et s'étendant transversalement à l'étendue longitudinale de la direction de déplacement du dispositif de transfert (2), sachant que l'ébauche de pièce moulée par injection peut être déplacée à l'aide du dispositif de transfert (2) dans la cavité correspondante du moule afin d'injecter un nouveau composant sur son noyau (5), comprenant également un dispositif de démoulage ou de dépouillement pour enlever ou dégager la pièce finie (12) du noyau (5), ce dispositif de démoulage ou de dépouillement comprenant un élément de démoulage ou de dépouillement (6) disposé sur le noyau (5), et un élément mobile (8) placé dans la moitié de moule (1) renfermant le dispositif de transfert (2), au moyen duquel l'élément de démoulage (6) est guidé par un guidage forcé de manière à pouvoir se déplacer vers l'extrémité avant du noyau (5), **caractérisé en ce que** l'élément mobile (8) du dispositif de démoulage ou de dépouillement est déplaçable dans la direction de déplacement du dispositif de transfert (2), et **en ce que** le guidage forcé est formé par une rainure de guidage courbée (11) et par un goujon de guidage (7) en prise avec cette dernière dans l'élément mobile (8) et dans l'élément de démoulage (6).

2. Moule selon la revendication précédente, **caractérisé en ce qu'**une rainure de guidage rectiligne (11) s'étendant dans la direction de déplacement et un goujon de guidage (7) sont en outre disposés entre l'élément de transfert fixe (4) du dispositif de transfert (2) et l'élément mobile (8).

3. Moule selon l'une des revendications précédentes, **caractérisé en ce qu'**un élément mobile (8) est respectivement disposé de part et d'autre du dispositif de transfert (2).

4. Moule selon l'une des revendications précédentes, **caractérisé en ce que** des noyaux (5) dotés chacun d'un élément de démoulage (6) associé respectif sont disposés de part et d'autre du plan médian longitudinal du dispositif de transfert (2).

5. Moule selon l'une des revendications précédentes, **caractérisé en ce que** le goujon de guidage (7) est formé par des galets ou des rouleaux.
